# EUROPEAN PATENT SPECIFICATION

(11) **EP 3 659 313 B1**
(45) Date of publication and mention of the grant of the patent: **17.08.2022**
(21) Application number: 18738044.9
(22) Date of filing: 08.06.2018
(51) Int. Cl.: H04L 9/40, G07C 9/20, G07C 9/00

(54) **USING RECEIVED AUDIO IDENTIFICATIONS FOR ACCESS CONTROL**
VERWENDUNG VON EMPFANGENEN AUDIOIDENTIFIKATIONEN FÜR DIE ZUGANGSKONTROLLE
UTILISATION D'IDENTIFICATIONS AUDIO REÇUES POUR COMMANDE D'ACCÈS

(30) Priority: 25.08.2017 US 201762550281 P
(43) Date of publication of application: 03.06.2020
(73) Proprietor: Google LLC, Mountain View, CA 94043 (US)
(72) Inventor: MADAN, Arjita, Hyderabad TS 500084 (IN)
(74) Representative: Smith, Jeremy Robert
(86) International application number: PCT/US2018/036789
(87) International publication number: WO 2019/040153

(56) References cited:
- US-A1- 2002 072 356
- US-A1- 2004 133 789
- US-A1- 2012 197 806
- US-A1- 2013 122 810

## Description

### TECHNICAL FIELD

The example embodiments described herein provide an access control computing device that is configured to receive configurable audio tokens from user computing devices and allow or deny access to users associated with the audio tokens.

### BACKGROUND

Computing devices often have speakers that emit data via audio communications. Typically, the broadcasts from user computing devices are of a personal nature to the users associated with the user computing devices, such as for conducting telephone conversations, listening to music, or following mapped directions.

Access control systems are located at a variety of important locations, including business entrances, airport gates, subway stops, bus stops, and other points of interest. Generally, at access controlled points of interest, users desire to gain access to a location and provide some form of identification or verification for entry. For example, a business may provide an employee with a badge or other identification device that may be swiped in a magnetic stripe reader for access. In another example, the identification device may be an RFID device that is read by an RFID reader to obtain access. In another example, a badge may employ a machine-readable code that is read by the access system to allow access.

All of these technologies impose some limitations on the communication of the access identification, such as hardware and software requirements, discovery range, discovery time, or required actions by the user.

US 2004/0133789 discloses a method and apparatus for controlling access to a secure network, system or application. In one embodiment, an apparatus for requesting authentication includes a storage medium that stores a cryptographic key, a processor that generates an access code using the cryptographic key, a converter that converts the access code into sound waves, and an audio output unit that outputs the sound waves encoded with the access code for authentication.

US 2012/0197806 A1 discloses systems, apparatuses and methods of using an acoustic communication mechanism to transmit data in the form of acoustic data from a mobile device to an electronic device.

US 2013/0122810 A1 discloses a method of associating a first device with a second device. The first device through its speaker broadcasts a request for association using an audio signal. The broadcasted audio signal is received by the second device through its microphone. The first and second devices then cooperatively verifies a security code and upon a successful verification of the security code, the first and the second devices are enabled to communicate with each other.

US 2002/072356 A1 discloses a mobile terminal 31 that detects its position, speed, and direction, and judges a control requirement based on the detected position, speed, and direction. Based on the judgment, the mobile terminal 31 transmits a message corresponding to the control requirement that has been satisfied to a control terminal 33. The control terminal 33 judges a message requirement based on the received message. Based on the judgment, the control terminal 33 transmits a control command corresponding to the message requirement that has been satisfied to a control target appliance 34. The control target appliance 34 executes an operation by following the received command.

### OVERVIEW

Aspects of the invention are set out in the independent claims. The example embodiments described herein provide an access computing device that is configured to receive configurable audio tokens from user computing devices and allow or deny access to users associated with the audio tokens.

In an example, an access system receives an audio token broadcast from a user computing device speaker component. The audio token may include data configured with or by an account management system, the access system, the user computing device, or any other suitable system. In an example, the access system transmits data to the account management system and a request for an audio token via a network. The access system might be a business, an airline gate, a transit system, a building security system, a residential building, a school system, a gym, or any other suitable system. For example, the data in the request may comprise an identity of the user to be allowed access, information about the computing device of the user, locations to which the user should be allowed access, verification of the identity of the access system computing device, additional verification that may be required of the user, or any other suitable data. The account management system receives the data and the request for the audio token via the network. The account management system stores the received data, generates an audio token, and associates the generated token with the stored data. In an example, the audio token comprises a random number comprising an alphanumeric and/or symbolic string of characters and the account management system generates the audio token via a random number generator. In an example, the account management system stores the audio token and the associated data in an audio token list maintained in a data storage unit accessible to the account management system. An example audio token list comprises a list that associates generated audio tokens with data associated with each generated audio token. The account management system transmits the generated audio token to the access system via a network. The access system receives the generated audio token via the network.

In other examples, the access system generates an audio token, associates the audio token with data, and transmits the audio token along with the data to the account management system via the network. In an example, the audio token comprises a random number comprising an alphanumeric and/or symbolic string of characters and the advertising generates the audio token via a random number generator. In an example, the access system stores the audio token and the associated data in an audio token list maintained in a data storage unit accessible to the access system that associates generated audio tokens with data associated with each audio token generated by the access system. In these examples, the account management system receives the audio token and the data, associates the audio token with the data, and stores the audio token and the data. In an example, the access system maintains a list of audio tokens with associated stored data. In an example, the account management system stores the audio token and the associated data in an audio token list maintained in a data storage unit accessible to the account management system, where the audio token list comprises a list that associates received audio tokens with received data associated with each received audio token.

The audio token is transmitted by the access system or the account management system to the user computing device over the network or via any other suitable technology. The user computing device stores the audio token and configures the user computing device to broadcast the audio token at appropriate situations. For example, the user computing device may be configured to broadcast the audio token continuously, when the user initiates a particular application, when the user computing device receives a request from an access computing device, when the user manually requests that the audio token be broadcast, or at any other suitable time or upon any other suitable request.

In another example, the user computing device is configured to monitor a location of the user computing device, such as via global positioning system ("GPS") technology onboard the user computing device. The user computing device is configured to recognize when the user computing device is within a boundary of an access system and begin broadcasting the audio token. For example, when the user approaches an access point for an office building, the GPS on the user computing device recognizes that the user is approaching the access door and begins to broadcast the audio token to request access for the user.

The access system configures an access computing device to listen for audio tokens at a location. In an example, the audio token is received by the access computing device by a microphone at the point of access. For example, the access computing device is positioned at the entrance to a building for which access is to be controlled. The access computing device listens for audio tokens to be broadcast by appropriate user computing devices.

When the access computing device receives the audio token via a microphone of the access computing device, the access computing device determines if the user associated with the user computing device is to be allowed access. In an example, the access computing device compares the audio token to a database of audio tokens associated with users to which access is to be granted. The database may be maintained on the access computing device, or the access computing device retransmits the audio token to the account management system via a network to request a verification of the audio token. If the audio token is stored with data that dictates that the user is to be allowed access to the particular location, then the access system determines that the user should be allowed access.

In another example, instead of comparing the audio token data to a database, the access computing device performs an algorithmic check to determine whether or not the received token passes certain rules in order to decide if access should be granted. For example, the access computing device determines if the status of the user based on data in the audio token indicates that the user access level is adequate for access to the location. Any other type of algorithmic check may be performed to allow or deny access.

If the user is to be granted access, then the access computing device unlocks a door to the building, opens a turnstile, displays a green access light, alerts an operator that the user should be allowed access, provides an audio verification of the user, or performs any action to indicate that the user has been allowed access to the location based on a verification of the audio token. If the user is not to be allowed access, the access computing device locks a door to the building, locks a turnstile, displays a red light, alerts an operator that the user should not be allowed access, provides an audio denial of the user, or performs any action to indicate that the user has not been allowed access to the location based on a denial of the audio token.

In certain examples, the user may be allowed varying degrees of access. For example, the user may be allowed access to one part of a building, but not another part. The user may be allowed access only after completing an additional verification step, such as showing an identification to an operator at the access location.

In certain examples, the audio token broadcast by the user computing device is broadcast at a different frequency than the audio token broadcast by other user computing devices. For example, one user computing device may broadcast at 5-10 kHz while another user computing device broadcasts at 10-15 kHz.

In the example, the user computing device broadcasts the audio token from a speaker component. An access computing device receives the audio token in a microphone component. The user computing device broadcasts the audio token to allow the access computing device to discover the user computing device. In an example, the audio token includes a user identification number or other identification data. When the access computing device receives the audio token from the user computing device, the access computing device may take any appropriate action, such as communicating to the user computing device an acceptance of the user.

In an example, the user computing device has a configurable range for the audio token or signal based on volume differences or an encoding scheme. For example, by adjusting the volume of the speaker output, the user computing device controls the distance from which the audio token may be detectable. If the volume is increased, the range at which the audio token may be received is increased compared to a lower volume. The user computing device may configure a range based on the size of a facility in which the user computing device is located, the distance from a user computing device, competing background noises, or any other suitable factors.

A benefit of using audio tokens is that the discovery time of audio tokens by a computing devices is fast relative to other wireless tokens, beacons, or signals. In an example, an audio token may allow discovery by an access computing device in 1-4 seconds. The time required for discovery may vary based on the amount of data in the audio token and the audio encoding parameters of the audio token. Other wireless signals, such as BLE or WiFi, may require a latency period to scan an environment, but an audio token is recognized substantially instantaneously.

Another benefit of using audio tokens, is that the audio tokens may be rotated to improve security. For example, since the user computing device is accessible over the network, the account management system or another suitable system may change the audio token on a configured schedule, randomly, when a security breach has occurred, or at any other suitable time. For example, if a user has resigned from a job, the account management system may immediately delete access based on the old audio token and provide a new audio token to the user computing device that allows access to certain portions of the facility, but not to secure areas of the facility. Because a user computing device is typically accessible over the network, the audio tokens may be deleted, updated, replaced, or otherwise reconfigured at any time that a network connection is available. In contrast, an RFID badge, or machine-readable code require burdensome manual actions to reconfigure.

Another benefit of the active listening for audio tokens is that a user may be granted access to a location without any required actions of the user. For example, if the user approaches a location and the audio tone is broadcasting, the access system may automatically admit the user. Conversely, with a magnetic stripe card, the user may have to swipe the card. With an RFID type badge, the user may have to hold the badge against the reader. With a machine-readable code, the user may have to hold the code under a scanner to be read. The audio token may allow the user to simply approach the access device location and receive an automatic entry to the location.

Another benefit of the audio tokens is that different levels of access may be granted to different users. Based on the data in the tokens, a first user may be granted access to one location, while a second user is allowed access to an additional location. In another example, a first user may be granted access to a location immediately, while a second user is allowed access only after showing an additional authentication.

By using and relying on the methods and systems described herein, the access system, the user computing device, and the account management system provide the capability to receive data from user computing devices via audio communication channels at access points to control access to certain locations. As such, the systems and methods described herein enable users to easily provide a token via an audio speaker. The access system, the user computing device, and the account management system enable an access system to dynamically control access to locations by providing real-time tokens to users to be communicated via audio tokens. As such, the methods and systems described herein allow users to gain access to a location without swiping a card, holding a badge to a reader, showing an identification, or performing any other actions.

### BRIEF DESCRIPTION OF THE DRAWINGS

Figure 1 is a block diagram depicting a system to receive audio tokens from a user computing device to allow access to locations, in accordance with certain examples.
Figure 2 is a block flow diagram depicting a method to provide access control based on received audio tokens, in accordance with certain examples.
Figure 3 is a block diagram depicting a computing machine and module, in accordance with certain examples.

### EXAMPLE SYSTEM ARCHITECTURE

Turning now to the drawings, in which like numerals indicate like (but not necessarily identical) elements throughout the figures, examples are described in detail.

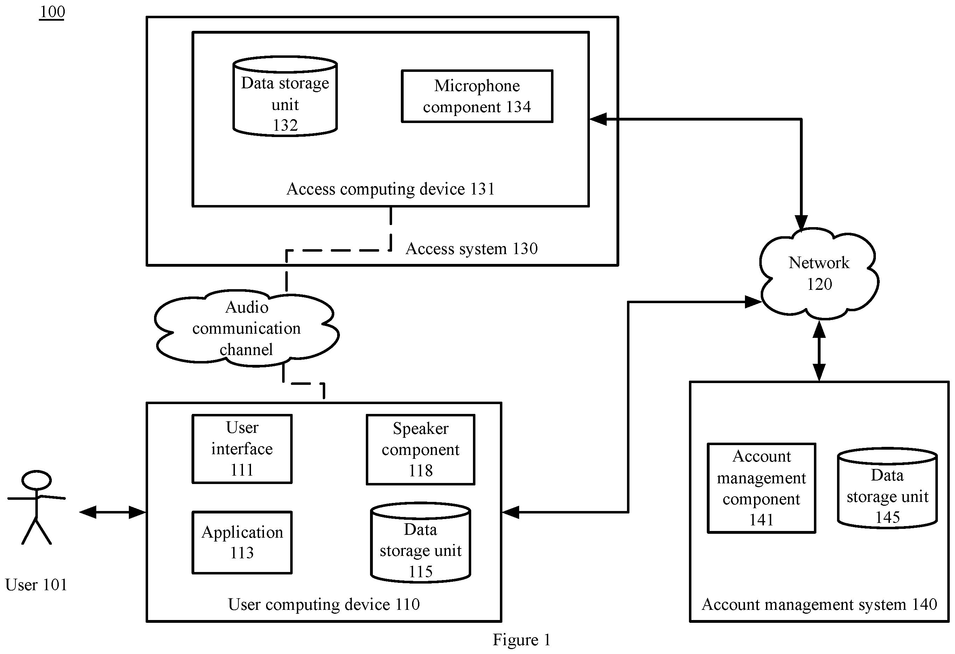

Figure 1 is a block diagram depicting a system 100 to receive audio tokens from a user computing device to allow access to locations, in accordance with certain examples. As depicted in Figure 1, the system 100 comprises network computing devices 110, 130, and 140 that are configured to communicate with one another via one or more networks 120. In some embodiments, a user associated with a device must install an application and/or make a feature selection to obtain the benefits of the techniques described herein.

In examples, the network 120 can include a local area network ("LAN"), a wide area network ("WAN"), an intranet, an Internet, storage area network ("SAN"), personal area network ("PAN"), a metropolitan area network ("MAN"), a wireless local area network ("WLAN"), a virtual private network ("VPN"), a cellular or other mobile communication network, Bluetooth, Bluetooth low energy ("BLE"), near field communication ("NFC"), ultrasound communication, or any combination thereof or any other appropriate architecture or system that facilitates the communication of signals, data, and/or messages. Throughout the discussion of examples, it should be understood that the terms "data" and "information" are used interchangeably herein to refer to text, images, audio, video, or any other form of information that can exist in a computer-based environment.

Each network computing device 110, 130, and 140 includes a device having a communication module capable of transmitting and receiving data over the network 120. For example, each network computing device 110, 130, and 140 can include a server, desktop computer, laptop computer, tablet computer, a television with one or more processors embedded therein and / or coupled thereto, smart phone, handheld computer, personal digital assistant ("PDA"), video game device, wearable computing device, or any other wired or wireless, processor-driven device. In the example depicted in Figure 1, the network computing devices 110, 130, and 140 are operated by users 101, access system operators, and account management system 140 operators, respectively.

An example user computing device 110 comprises a user interface 111, an application 113, a data storage unit 115, and a speaker component 118. The user computing device 110 communicates with an account management system 140 via the network 120 to receive data, such as an audio token. The user computing device 110 communicates data over an audio communication channel to the access computing device 131 associated with the access system 130.

In an example, the user interface 111 enables the user 101 to interact with the user computing device 110. For example, the user interface 111 comprises a touch screen, a voice-based interface, or any other interface that allows the user 101 to provide input and receive output from one or more applications on the user computing device 110. In an example, the user 101 interacts via the user interface 111 with the application 113.

In an example, the application 113 is a program, function, routine, applet, or similar entity that exists on and performs operations on the user computing device 110. In certain examples, the user 101 must install the application 113 and/or make a feature selection on the user computing device 110 to obtain the benefits of the techniques described herein. In an example, the user 101 accesses the application 113 on the user computing device 110 via the user interface 111. In an example, the application 113 is associated with the account management system 140. In an example, the application 113 comprises an access application that communicates audio tokens when initiated. In yet another example, the access system 113 comprises a ticketing application and the account management system 140 comprises an account management system. The application 113 may represent any other suitable application that would benefit from the methods described herein.

In an example, the data storage unit 115 comprises a local or remote data storage structure accessible to the user computing device 110 suitable for storing information. In an example, the data storage unit 115 stores encrypted information, such as HTML5 local storage.

In an example, the speaker component 118 comprises a speaker device that is capable of emitting ultrasound outputs and audible sound outputs from an environment of the user computing device 110. In an example, the speaker component 118 communicates with the application 113 to receive an instruction to transition from a passive mode to an active mode and communicate ultrasound outputs. The user computing device 110 provides the outputs to the speaker component 118 to be broadcast, such as via the application 113. The outputs may be configured by the user computing device 110, the user 101, the account management system 140, or any other party or device.

An example access system 130 comprises one or more access computing devices 131 located at advertising locations. An example access computing device 131 comprises a data storage unit 132 and a microphone component 134. In an example, the access computing device 131 is a standalone receiving device. For example, the access computing device 131 is a standalone computing device with a processor, the components listed herein, and any other components required to perform the functions described herein, such as a power supply or a user interface (not shown). In an example, the access computing device 131 is a tablet computer, a laptop computer, or other device comprising a microphone component 134 capable of receiving audio tokens over an audio communication channel. In another example, the access computing device 131 is a mobile computing device such as a smartphone device or other mobile computing device. In another example, the access computing device 131 is a point of sale terminal. The access system 130 communicates with an account management system 140 via the network 120. The access computing device 131 communicates data to the user computing device 110 via an audio communication channel.

In an example, the data storage unit 132 comprises a local or remote data storage structure accessible to the access computing device 131 suitable for storing information. In an example, the data storage unit 132 stores encrypted information, such as HTML5 local storage.

In an example, the microphone component 134 comprises a microphone device that is capable of receiving ultrasound inputs and audible sound inputs from an environment of the access computing device 131. In an example, the microphone component 134 communicates with the account management system 140 or another party to receive an instruction to transition from a passive mode to an active mode and listen for ultrasound inputs and/or provide outputs.

An example account management system 140, or service processing system, comprises an account management component 141 and a data storage unit 145. In an example, the account management system communicates with the user computing device 110 and the access system 130 via the network 120.

In an example, the account management component 141 manages user accounts and access system accounts. The account management component 141 receives requests to add, edit, delete, or otherwise modify access account information for an account of a user 101 or an account of an access system 130. The account management component 141 creates or stores the data for an audio token to be associated with the user account. The account management component 141 communicates the audio token to the user computing device 110 and the access computing device 130 so that the two devices can authenticate a user 101 with the audio tokens.

In an example, the data storage unit 145 comprises a local or remote data storage structure accessible to the account management system 140 suitable for storing information. In an example, the data storage unit 145 stores encrypted information, such as HTML5 local storage.

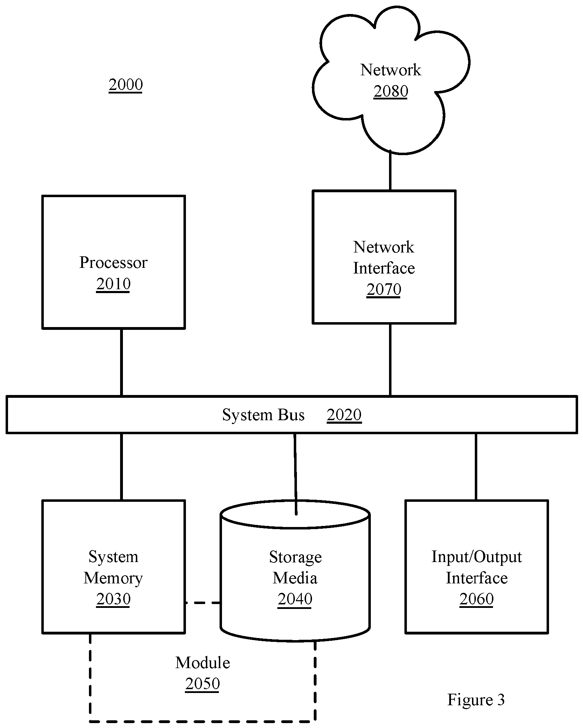

In examples, the network computing devices and any other computing machines associated with the technology presented herein may be any type of computing machine such as, but not limited to, those discussed in more detail with respect to Figure 3. Furthermore, any functions, applications, or components associated with any of these computing machines, such as those described herein or any others (for example, scripts, web content, software, firmware, hardware, or modules) associated with the technology presented herein may by any of the components discussed in more detail with respect to Figure 3. The computing machines discussed herein may communicate with one another, as well as with other computing machines or communication systems over one or more networks, such as network 120. The network 120 may include any type of data or communications network, including any of the network technology discussed with respect to Figure 3.

### Example Processes

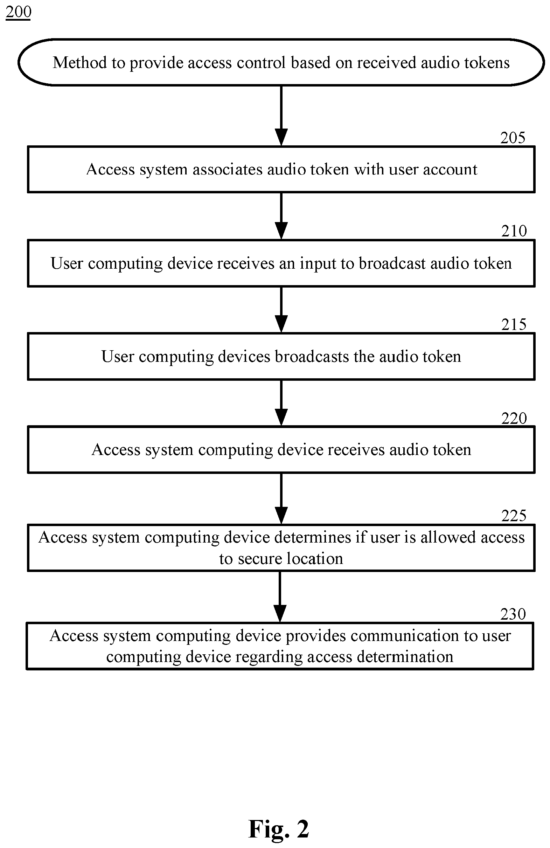

The example methods illustrated in Figure 2 is described hereinafter with reference to the components of the example operating environment 100. The example methods of Figure 2 may also be performed with other systems and in other environments.

Figure 2 is a block flow diagram depicting a method to provide access control based on received audio tokens, in accordance with certain examples.

In block 205, the access system computing device 131 associates audio token with a user account at the access system 130. For example, the access system computing device 131 generates an audio token, associates the audio token with data, and transmits the audio token along with the data to the account management system 140 via the network 120. In an example, the audio token comprises a random number comprising an alphanumeric and/or symbolic string of characters and the advertising generates the audio token via a random number generator. In an example, the access system computing device 131 stores the audio token and the associated data in an audio token list maintained in a data storage unit 132 accessible to the access system computing device 131 that associates generated audio tokens with data associated with each audio token generated by the access system computing device 131. In these examples, the account management system 140 receives the audio token and the data, associates the audio token with the data, and stores the audio token and the data. In an example, the access system computing device 131 maintains a list of audio tokens with associated stored data. In an example, the account management system 140 stores the audio token and the associated data in an audio token list maintained in a data storage unit 145 accessible to the account management system, where the audio token list comprises a list that associates received audio tokens with received data associated with each received audio token.

The audio token is transmitted by the access system computing device 131 or the account management system 140 to the user computing device 110 over the network 120 or via any other suitable technology.

In block 210, the user computing device 110 receives an input to broadcast the audio token. For example, the user computing device 110 stores the audio token and configures the user computing device 110 to broadcast the audio token at appropriate situations. For example, the user computing device 110 may be configured to broadcast the audio token continuously, when the user 101 initiates a particular application 113, when the user computing device 110 receives a request from an access computing device, when the user 101 manually requests that the audio token be broadcast, or at any other suitable time or upon any other suitable request.

In block 215, after receiving the input, or otherwise being prompted, the user computing device broadcasts the audio token. The broadcast is made from a speaker component 118 of the user computing device 110.

In block 220, the access system computing device 131 receives the audio token. The access system computing device 131 is configured to listen for audio tokens at a location. In an example, the audio token is received by the access system computing device 131 by a microphone component 134 at the point of access. For example, the access system computing device 131 is positioned at the entrance to a building for which access is to be controlled. The access system computing device 131 listens for audio tokens to be broadcast by appropriate user computing devices.

In block 225, the access system computing device 131 determines if user 101 is allowed access to secure location. When the access system computing device 131 receives the audio token via a microphone 134 of the access system computing device 131, the access system computing device 131 determines if the user 101 associated with the user computing device 110 is to be allowed access. In an example, the access system computing device 131 compares the audio token to a database of audio tokens associated with users to which access is to be granted. The database may be maintained on the data storage unit 132 of the access system computing device 131, or the access computing device retransmits the audio token to the account management system 140 via a network 120 to request a verification of the audio token. If the audio token is stored with data that dictates that the user 101 is to be allowed access to the particular location, then the access system computing device 131 determines that the user should be allowed access.

In another example, instead of comparing the audio token data to a database, the access system computing device 131 performs an algorithmic check to determine whether or not the received token passes certain rules in order to decide if access should be granted. For example, the access system computing device 131 determines if the status of the user 101 based on data in the audio token indicates that the user access level is adequate for access to the location. The rules for the algorithm may be based on the a status of the user 101, such as access frequency, length of time since the last access, priority status of the user 101, signal strength of the audio token signal, or any other suitable status rules. Any other type of algorithmic check may be performed to allow or deny access.

If the user 101 is to be granted access, then the access system computing device 131 unlocks a door to the building, opens a turnstile, displays a green access light, alerts an operator that the user should be allowed access, provides an audio verification of the user, or performs any action to indicate that the user has been allowed access to the location based on a verification of the audio token. If the user 101 is not to be allowed access, the access computing device locks a door to the building, locks a turnstile, displays a red light, alerts an operator that the user should not be allowed access, provides an audio denial of the user, or performs any action to indicate that the user 101 has not been allowed access to the location based on a denial of the audio token. For example, the access system computing device 131 effectuates one or more of the aforementioned measures by generating and outputting at least one corresponding control signal.

In block 230, the access system computing device 131 provides communication to the user computing device 110 regarding access determination. In an example, the access system computing device 131 communicates a notification to the user computing device 110 via audio token, the network 120, Bluetooth, Wi-Fi, text, email, instant message, or in any other suitable method. The message includes the access determination for the user 101, such as whether the user 101 will be allowed access. Additionally or alternatively, the message includes instructions for the user 101 to obtain access when access is denied. For example, the user 101 may be instructed to enter a security code into a keypad, contact an operator of the access system 130, or perform any other suitable authentication task.

### Other Examples

Figure 3 depicts a computing machine 2000 and a module 2050 in accordance with certain examples. The computing machine 2000 may correspond to any of the various computers, servers, mobile devices, embedded systems, or computing systems presented herein. The module 2050 may comprise one or more hardware or software elements configured to facilitate the computing machine 2000 in performing the various methods and processing functions presented herein. The computing machine 2000 may include various internal or attached components such as a processor 2010, system bus 2020, system memory 2030, storage media 2040, input/output interface 2060, and a network interface 2070 for communicating with a network 2080.

The computing machine 2000 may be implemented as a conventional computer system, an embedded controller, a laptop, a server, a mobile device, a smartphone, a set-top box, a kiosk, a router or other network node, a vehicular information system, one more processors associated with a television, a customized machine, any other hardware platform, or any combination or multiplicity thereof. The computing machine 2000 may be a distributed system configured to function using multiple computing machines interconnected via a data network or bus system.

The processor 2010 may be configured to execute code or instructions to perform the operations and functionality described herein, manage request flow and address mappings, and to perform calculations and generate commands. The processor 2010 may be configured to monitor and control the operation of the components in the computing machine 2000. The processor 2010 may be a general purpose processor, a processor core, a multiprocessor, a reconfigurable processor, a microcontroller, a digital signal processor ("DSP"), an application specific integrated circuit ("ASIC"), a graphics processing unit ("GPU"), a field programmable gate array ("FPGA"), a programmable logic device ("PLD"), a controller, a state machine, gated logic, discrete hardware components, any other processing unit, or any combination or multiplicity thereof. The processor 2010 may be a single processing unit, multiple processing units, a single processing core, multiple processing cores, special purpose processing cores, coprocessors, or any combination thereof. According to certain embodiments, the processor 2010 along with other components of the computing machine 2000 may be a virtualized computing machine executing within one or more other computing machines.

The system memory 2030 may include non-volatile memories such as read-only memory ("ROM"), programmable read-only memory ("PROM"), erasable programmable read-only memory ("EPROM"), flash memory, or any other device capable of storing program instructions or data with or without applied power. The system memory 2030 may also include volatile memories such as random access memory ("RAM"), static random access memory ("SRAM"), dynamic random access memory ("DRAM"), and synchronous dynamic random access memory ("SDRAM"). Other types of RAM also may be used to implement the system memory 2030. The system memory 2030 may be implemented using a single memory module or multiple memory modules. While the system memory 2030 is depicted as being part of the computing machine 2000, one skilled in the art will recognize that the system memory 2030 may be separate from the computing machine 2000 without departing from the scope of the subject technology. It should also be appreciated that the system memory 2030 may include, or operate in conjunction with, a non-volatile storage device such as the storage media 2040.

The storage media 2040 may include a hard disk, a floppy disk, a compact disc read only memory ("CD-ROM"), a digital versatile disc ("DVD"), a Blu-ray disc, a magnetic tape, a flash memory, other non-volatile memory device, a solid state drive ("SSD"), any magnetic storage device, any optical storage device, any electrical storage device, any semiconductor storage device, any physical-based storage device, any other data storage device, or any combination or multiplicity thereof. The storage media 2040 may store one or more operating systems, application programs and program modules such as module 2050, data, or any other information. The storage media 2040 may be part of, or connected to, the computing machine 2000. The storage media 2040 may also be part of one or more other computing machines that are in communication with the computing machine 2000 such as servers, database servers, cloud storage, network attached storage, and so forth.

The module 2050 may comprise one or more hardware or software elements configured to facilitate the computing machine 2000 with performing the various methods and processing functions presented herein. The module 2050 may include one or more sequences of instructions stored as software or firmware in association with the system memory 2030, the storage media 2040, or both. The storage media 2040 may therefore represent examples of machine or computer readable media on which instructions or code may be stored for execution by the processor 2010. Machine or computer readable media may generally refer to any medium or media used to provide instructions to the processor 2010. Such machine or computer readable media associated with the module 2050 may comprise a computer software product. It should be appreciated that a computer software product comprising the module 2050 may also be associated with one or more processes or methods for delivering the module 2050 to the computing machine 2000 via the network 2080, any signal-bearing medium, or any other communication or delivery technology. The module 2050 may also comprise hardware circuits or information for configuring hardware circuits such as microcode or configuration information for an FPGA or other PLD.

The input/output ("I/O") interface 2060 may be configured to couple to one or more external devices, to receive data from the one or more external devices, and to send data to the one or more external devices. Such external devices along with the various internal devices may also be known as peripheral devices. The I/O interface 2060 may include both electrical and physical connections for operably coupling the various peripheral devices to the computing machine 2000 or the processor 2010. The I/O interface 2060 may be configured to communicate data, addresses, and control signals between the peripheral devices, the computing machine 2000, or the processor 2010. The I/O interface 2060 may be configured to implement any standard interface, such as small computer system interface ("SCSI"), serial-attached SCSI ("SAS"), fiber channel, peripheral component interconnect ("PCI"), PCI express (PCIe), serial bus, parallel bus, advanced technology attached ("ATA"), serial ATA ("SATA"), universal serial bus ("USB"), Thunderbolt, FireWire, various video buses, and the like. The I/O interface 2060 may be configured to implement only one interface or bus technology. Alternatively, the I/O interface 2060 may be configured to implement multiple interfaces or bus technologies. The I/O interface 2060 may be configured as part of, all of, or to operate in conjunction with, the system bus 2020. The I/O interface 2060 may include one or more buffers for buffering transmissions between one or more external devices, internal devices, the computing machine 2000, or the processor 2010.

The I/O interface 2060 may couple the computing machine 2000 to various input devices including mice, touch-screens, scanners, electronic digitizers, sensors, receivers, touchpads, trackballs, cameras, microphones, keyboards, any other pointing devices, or any combinations thereof. The I/O interface 2060 may couple the computing machine 2000 to various output devices including video displays, speakers, printers, projectors, tactile feedback devices, automation control, robotic components, actuators, motors, fans, solenoids, valves, pumps, transmitters, signal emitters, lights, and so forth.

The computing machine 2000 may operate in a networked environment using logical connections through the network interface 2070 to one or more other systems or computing machines across the network 2080. The network 2080 may include wide area networks (WAN), local area networks (LAN), intranets, the Internet, wireless access networks, wired networks, mobile networks, telephone networks, optical networks, or combinations thereof. The network 2080 may be packet switched, circuit switched, of any topology, and may use any communication protocol. Communication links within the network 2080 may involve various digital or an analog communication media such as fiber optic cables, free-space optics, waveguides, electrical conductors, wireless links, antennas, radio-frequency communications, and so forth.

The processor 2010 may be connected to the other elements of the computing machine 2000 or the various peripherals discussed herein through the system bus 2020. It should be appreciated that the system bus 2020 may be within the processor 2010, outside the processor 2010, or both. According to certain examples, any of the processor 2010, the other elements of the computing machine 2000, or the various peripherals discussed herein may be integrated into a single device such as a system on chip ("SOC"), system on package ("SOP"), or ASIC device.

In situations in which the systems discussed here collect personal information about users, or may make use of personal information, the users may be provided with an opportunity or option to control whether programs or features collect user information (e.g., information about a user's social network, social actions or activities, profession, a user's preferences, or a user's current location), or to control whether and/or how to receive content from the content server that may be more relevant to the user. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over how information is collected about the user and used by a content server.

Embodiments may comprise a computer program that embodies the functions described and illustrated herein, wherein the computer program is implemented in a computer system that comprises instructions stored in a machine-readable medium and a processor that executes the instructions. However, it should be apparent that there could be many different ways of implementing embodiments in computer programming, and the embodiments should not be construed as limited to any one set of computer program instructions. Further, a skilled programmer would be able to write such a computer program to implement an embodiment of the disclosed embodiments based on the appended flow charts and associated description in the application text. Therefore, disclosure of a particular set of program code instructions is not considered necessary for an adequate understanding of how to make and use embodiments. Further, those skilled in the art will appreciate that one or more aspects of embodiments described herein may be performed by hardware, software, or a combination thereof, as may be embodied in one or more computing systems. Moreover, any reference to an act being performed by a computer should not be construed as being performed by a single computer as more than one computer may perform the act.

The examples described herein can be used with computer hardware and software that perform the methods and processing functions described herein. The systems, methods, and procedures described herein can be embodied in a programmable computer, computer-executable software, or digital circuitry. The software can be stored on computer-readable media. For example, computer-readable media can include a floppy disk, RAM, ROM, hard disk, removable media, flash memory, memory stick, optical media, magneto-optical media, CD-ROM, etc. Digital circuitry can include integrated circuits, gate arrays, building block logic, field programmable gate arrays (FPGA), etc.

## Claims

1. A system (130) to control access via received audio tokens, comprising:
a storage device (132);
an audio microphone (134) communicatively coupled to the storage device;
a user computing device (110);
a processor communicatively coupled to the storage device and the audio microphone, wherein the processor executes application code instructions that are stored in the storage device to cause the system to:
receive an audio token communicated from the user computing device, the audio token comprising a set of data associated with a user account associated with the user computing device, wherein the user computing device communicates the audio token in response to a determination by the user computing device that the user computing device is at a particular location;
analyze the set of data in the audio token; and
in response to determining that the audio token is associated with the user account and that the user account is allowed entry to the particular location, allow access to a user associated with the user account.

2. The system of claim 1, wherein the analyzing comprises comparing the audio token to a database of audio tokens associated with one or more user accounts.

3. The system of claim 1, wherein the analyzing comprises performing an algorithm on the set of data to determine if access should be granted.

4. The system of claim 1, wherein the processor is further configured to execute application code instructions that are stored in the storage device to cause the system to deny access to a user associated with the user account in response to determining that the audio token is associated with a user account that is not allowed entry to the particular location.

5. The system of claim 1, wherein the processor is further configured to execute application code instructions that are stored in the storage device to cause the system to require additional authentication from the user in response to determining that the audio token is associated with a user account that is not allowed entry to the particular location.

6. The system of claim 2, wherein the database is maintained on an account management system (140), or wherein the database is maintained on the system (130).

7. The system of claim 1, wherein the user computing device broadcasts the audio token at a configured volume.

8. The system of claim 1, wherein the user is allowed access by the unlocking of an access door.

9. The system of claim 1, wherein the audio token is broadcast at a volume configured based on a desired range at which the audio microphone is able to receive the audio token.

10. The system of claim 1, wherein the user computing device is configured to communicate the audio token via a speaker component (118) of the user computing device.

11. A computer-implemented method to control access via received audio tokens, comprising:
receiving, by one or more computing devices (131), an audio token communicated from a user computing device (110), the audio token comprising a set of data associated with a user account associated with the user computing device;
communicating, by the user computing device, the audio token in response to a determination by the user computing device that the user computing device is at a particular location;
analyzing, by the one or more computing devices, the set of data in the audio token; and
in response to determining that the audio token is associated with the user account and that the user account is allowed entry to the particular location, allowing, by the one or more computing devices, access to a user associated with the user account.

12. The computer-implemented method of claim 11, wherein the analysing comprises comparing the audio token to a database of audio tokens associated with one or more user accounts.

13. The computer-implemented method of claim 11, wherein the analysing comprises performing an algorithm on the set of data to determine if access should be granted.

## Patentansprüche

1. System (130) zum Steuern eines Zugangs über empfangene Audio-Token, umfassend:
eine Speichervorrichtung (132);
ein Audiomikrofon (134), das kommunikativ mit der Speichervorrichtung gekoppelt ist;
eine Benutzer-Rechenvorrichtung (110);
einen Prozessor, der kommunikativ mit der Speichervorrichtung und dem Audiomikrofon gekoppelt ist, wobei der Prozessor Anwendungscodeanweisungen ausführt, die in der Speichervorrichtung gespeichert sind, um das System zu veranlassen zum:
Empfangen eines Audio-Tokens, der von der Benutzer-Rechenvorrichtung kommuniziert wird, wobei der Audio-Token einen Datensatz umfasst, der einem Benutzerkonto zugeordnet ist, das der Benutzer-Rechenvorrichtung zugeordnet ist, wobei die Benutzer-Rechenvorrichtung den Audio-Token als Reaktion auf eine Bestimmung durch die Benutzer-Rechenvorrichtung kommuniziert, dass sich die Benutzer-Rechenvorrichtung an einem bestimmten Ort befindet;
Analysieren des Datensatzes im Audio-Token; und
Erlauben des Zugangs, als Reaktion auf das Bestimmen, dass der Audio-Token dem Benutzerkonto zugeordnet ist und dass dem Benutzerkonto der Zugang zu dem bestimmten Ort erlaubt ist, für einen Benutzer, der dem Benutzerkonto zugeordnet ist.

2. System nach Anspruch 1, wobei das Analysieren Vergleichen des Audio-Tokens mit einer Datenbank von Audio-Tokens umfasst, die einem oder mehreren Benutzerkonten zugeordnet sind.

3. System nach Anspruch 1, wobei das Analysieren Durchführen eines Algorithmus an dem Datensatz umfasst, um zu bestimmen, ob Zugang gewährt werden sollte.

4. System nach Anspruch 1, wobei der Prozessor ferner dazu konfiguriert ist, Anwendungscodeanweisungen auszuführen, die in der Speichervorrichtung gespeichert sind, um das System zu veranlassen, einem Benutzer, der dem Benutzerkonto zugeordnet ist, den Zugang zu verweigern, als Reaktion auf das Bestimmen, dass der Audio-Token einem Benutzerkonto zugeordnet ist, dem der Zugang zu dem bestimmten Ort nicht erlaubt ist.

5. System nach Anspruch 1, wobei der Prozessor ferner dazu konfiguriert ist, Anwendungscodeanweisungen auszuführen, die in der Speichervorrichtung gespeichert sind, um das System zu veranlassen, eine zusätzliche Authentifizierung von dem Benutzer zu verlangen, als Reaktion auf das Bestimmen, dass der Audio-Token einem Benutzerkonto zugeordnet ist, dem der Zugang zu dem bestimmten Ort nicht erlaubt ist.

6. System nach Anspruch 2, wobei die Datenbank auf einem Kontoverwaltungssystem (140) gepflegt wird oder wobei die Datenbank auf dem System (130) gepflegt wird.

7. System nach Anspruch 1, wobei die Rechenvorrichtung des Benutzers den Audio-Token mit einer konfigurierten Lautstärke sendet.

8. System nach Anspruch 1, wobei dem Benutzer der Zugang durch das Entriegeln einer Zugangstür erlaubt wird.

9. System nach Anspruch 1, wobei der Audio-Token mit einer Lautstärke gesendet wird, die basierend auf einer gewünschten Reichweite konfiguriert ist, in der das Audiomikrofon in der Lage ist, den Audio-Token zu empfangen.

10. System nach Anspruch 1, wobei die Benutzer-Rechenvorrichtung dazu konfiguriert ist, den Audio-Token über ein Lautsprecherbauteil (118) der Benutzer-Rechenvorrichtung zu übermitteln.

11. Computerimplementiertes Verfahren zum Steuern eines Zugangs über empfangene Audio-Token, umfassend:
Empfangen, durch eine oder mehrere Rechenvorrichtungen (131), eines Audio-Tokens, der von einer Benutzer-Rechenvorrichtung (110) kommuniziert wird, wobei der Audio-Token einen Datensatz umfasst, der einem Benutzerkonto zugeordnet ist, das der Benutzer-Rechenvorrichtung zugeordnet ist;
Kommunizieren, durch die Benutzer-Rechenvorrichtung, des Audio-Tokens als Reaktion auf eine Bestimmung durch die Benutzer-Rechenvorrichtung, dass sich die Benutzer-Rechenvorrichtung an einem bestimmten Ort befindet;
Analysieren, durch die eine oder die mehreren Rechenvorrichtungen, des Datensatzes in dem Audio-Token; und
Erlauben, durch die eine oder die mehreren Rechenvorrichtungen, des Zugangs, als Reaktion auf das Bestimmen, dass der Audio-Token dem Benutzerkonto zugeordnet ist und dass dem Benutzerkonto der Zugang zu dem bestimmten Ort erlaubt ist, für einen Benutzer, der dem Benutzerkonto zugeordnet ist.

12. Computerimplementiertes Verfahren nach Anspruch 11, wobei das Analysieren Vergleichen des Audio-Tokens mit einer Datenbank von Audio-Tokens umfasst, die einem oder mehreren Benutzerkonten zugeordnet sind.

13. Computerimplementiertes Verfahren nach Anspruch 11, wobei das Analysieren Durchführen eines Algorithmus an dem Datensatz umfasst, um zu bestimmen, ob Zugang gewährt werden sollte.

## Revendications

1. Système (130) permettant de commander l'accès via des jetons audio reçus, comprenant :
un dispositif de stockage (132) ; et
un microphone audio (134) couplé en communication au dispositif de stockage ;
un dispositif informatique utilisateur (110) ;
un processeur couplé en communication au dispositif de stockage et au microphone audio, ledit processeur exécutant des instructions de code d'application qui sont stockées dans le dispositif de stockage pour amener le système à :
recevoir un jeton audio communiqué par le dispositif informatique utilisateur, le jeton audio comprenant un ensemble de données associées à un compte utilisateur associé au dispositif informatique utilisateur, ledit dispositif informatique utilisateur communiquant le jeton audio en réponse à la détermination par le dispositif informatique utilisateur que le dispositif informatique utilisateur se trouve à un emplacement particulier ;
analyser l'ensemble de données dans le jeton audio ; et
en réponse à la détermination que le jeton audio est associé au compte utilisateur et que le compte utilisateur est autorisé à entrer dans l'emplacement particulier, autoriser l'accès à un utilisateur associé au compte utilisateur.

2. Système selon la revendication 1, ladite analyse comprenant la comparaison du jeton audio à une base de données de jetons audio associés à un ou plusieurs comptes utilisateur.

3. Système selon la revendication 1, ladite analyse comprenant l'exécution d'un algorithme sur l'ensemble de données pour déterminer si l'accès doit être accordé.

4. Système selon la revendication 1, ledit processeur étant en outre configuré pour exécuter des instructions de code d'application qui sont stockées dans le dispositif de stockage pour amener le système à refuser l'accès à un utilisateur associé au compte utilisateur en réponse à la détermination que le jeton audio est associé à un compte utilisateur qui n'est pas autorisé à accéder à l'emplacement particulier.

5. Système selon la revendication 1, ledit processeur étant en outre configuré pour exécuter des instructions de code d'application qui sont stockées dans le dispositif de stockage pour amener le système à exiger une authentification supplémentaire de la part de l'utilisateur en réponse à la détermination que le jeton audio est associé à un compte utilisateur qui n'est pas autorisé à entrer dans l'emplacement particulier.

6. Système selon la revendication 2, ladite base de données étant maintenue sur un système de gestion de compte (140), ou ladite base de données étant maintenue sur le système (130).

7. Système selon la revendication 1, ledit dispositif informatique de l'utilisateur diffusant le jeton audio à un volume configuré.

8. Système selon la revendication 1, ledit utilisateur étant autorisé à accéder par le déverrouillage d'une porte d'accès.

9. Système selon la revendication 1, ledit jeton audio étant diffusé à un volume configuré sur la base d'une plage souhaitée à laquelle le microphone audio est capable de recevoir le jeton audio.

10. Système selon la revendication 1, ledit dispositif informatique utilisateur étant configuré pour communiquer le jeton audio via un composant de haut-parleur (118) du dispositif informatique utilisateur.

11. Procédé mis en œuvre par ordinateur pour commander l'accès via des jetons audio reçus, comprenant :
la réception, par un ou plusieurs dispositifs informatiques (131), d'un jeton audio communiqué par un dispositif informatique utilisateur (110), le jeton audio comprenant un ensemble de données associées à un compte utilisateur associé au dispositif informatique utilisateur ;
la communication, par le dispositif informatique utilisateur, du jeton audio en réponse à la détermination par le dispositif informatique utilisateur que le dispositif informatique utilisateur se trouve à un emplacement particulier ;
l'analyse, par lesdits un ou plusieurs dispositifs informatiques, de l'ensemble de données dans le jeton audio ; et
en réponse à la détermination que le jeton audio est associé au compte utilisateur et que le compte utilisateur est autorisé à entrer dans l'emplacement particulier, l'autorisation, par lesdits un ou plusieurs dispositifs informatiques, de l'accès à un utilisateur associé au compte utilisateur.

12. Procédé mis en œuvre par ordinateur selon la revendication 11, ladite analyse comprenant la comparaison du jeton audio à une base de données de jetons audio associés à un ou plusieurs comptes utilisateur.

13. Procédé mis en œuvre par ordinateur selon la revendication 11, ladite analyse comprenant l'exécution d'un algorithme sur l'ensemble de données pour déterminer si l'accès doit être accordé.
